# EUROPEAN PATENT SPECIFICATION

(11) **EP 0 545 410 B1**
(45) Date of publication and mention of the grant of the patent: **01.10.1997**
(21) Application number: 92120646.2
(22) Date of filing: 03.12.1992
(51) Int. Cl.: F16L 33/26, F16L 25/00

(54) **Sealing quick-coupling device for unbraided flexible metal tubes**
Dichtende Schnellkupplungsvorrichtung für flexible, ungeflochtene Rohre aus Metall
Dispositif d'étanchéité pour un raccord rapide avec tuyaux non-tressés et flexibles en métal

(30) Priority: 06.12.1991 IT TO910944
(43) Date of publication of application: 09.06.1993
(73) Proprietor: ASTROFLEX S.p.A., 10093 Collegno (Torino) (IT)
(72) Inventor: Castelli, Sergio, I-10100 Torino (IT)
(74) Representative: Modiano, Guido, Dr.-Ing.

(56) References cited:
- FR-A- 1 286 787
- US-A- 4 437 691
- US-A- 4 630 850

## Description

The present invention relates to a sealing and weld-free quick-coupling device for flexible metal tubes of the type with parallel or helical undulations.

The coupling of metal tubes of the specified type to other rigid pipes, unions and the like is difficult because of the presence of the undulations, which, by deforming, do not allow for axially forcing the undulated tube against the sealing gaskets which abut on the rigid pipe or on the connecting union.

In order to avoid this problem, it has been suggested in US-A-4437691 to use unions in which a movable bush, pulled by a ring, which is screwed on a connecting sleeve, acts with a protruding ring, which is engaged in a groove of the undulated tube so as to compress a series of undulations, generally the two terminal ones, against a sealing gasket which abuts against the front surface of the sleeve. The tightness of these connections, however, is not perfect, especially in the presence of negative pressure in the tubes, because the sealing surface is limited to the region of front mating between the tubes to be joined and because said surface, due to the pack-like deformation of the undulations of the flexible tube, is not flat and uniform enough and thus such as to ensure correct mating.

Particularly, the forming of a flat front mating surface by compressing the undulations is not possible if said undulations are helical, therefore these known connections cannot be used for flexible tubes with undulations of this type.

Furthermore, even in said known connections the region of contact between the protruding ring of the bush which deforms the undulations of the tube and the tube itself is very limited, so that a high concentration of stresses forms during tightening, and this on one hand can create tears in the sheet metal of the undulated tube and on the other hand can produce permanent deformations of the gasket when, in an attempt to ensure tightness, the ring which pulls said bush is tightened excessively.

Another problem of the above known connections resides in the fact that it is not possible to use standard torus-like gaskets which, by deforming, would prevent or at least compromise the necessary pack-like compression of said terminal undulations of the tube.

US-A-4630850 discloses a pipe joint similar to that described above in that it includes a cap nut surrounding a corrugated tubular member and threaded about a pipe joint body for connection to a desired member or apparatus. Moreover, a sleeve having an inner peripheral corrugated surface is matchingly fitted about the corrugated tubular member, between such member and the cap nut. However, a sealing o-ring is not provided as in US-A-4437691, and instead when the cap nut is tightened on the joint body the sleeve forms a compressed ridge portion at an end portion of the tubular member between an end of the sleeve and a shoulder provided at the joint body. The sleeve is essentially cylindrical and formed with a cutout which splits the sleeve into axially separated segments except at a connecting portion between the segments provided at a thicker flange portion of the sleeve, in order that the sleeve may be opened at the cutout and fitted over the tubular member. US-A-4630850 includes a combination of technical features as included in the preamble of the appended claim 1.

The aim of the present invention is to eliminate the above-mentioned problems and within the scope of this general aim said invention has the object of providing a coupling device, herein termed connection, for undulated flexible tubes which is suitable to ensure perfect tightness of said connection by virtue of the fact that the sealing surface is not only frontal but is also extended to a significant portion of the lateral surface of the undulated flexible tube.

Another object of the invention is to provide a connection wherein the pack-like compression of the undulations of the flexible tube is not required and in which, therefore, it is possible to use both elastomer and metal (copper) standard torus-like gaskets.

A further particular object of the present invention is to provide a coupling assembly which has a very simplified structure which can be substantially reduced to just two parts and is suitable to connect both flexible tubes with parallel undulations and flexible tubes with helical undulations.

In view of this aim, these objects and others which will become apparent hereinafter from the following detailed description, the present invention provides an assembly comprising an unbraided flexible metal tube, a rigid tube, union or the like, and a coupling device for connecting said flexible tube to said rigid tube, union or the like, the coupling device comprising:
a sleeve which is associated with the rigid tube or union;
at least one cylindrical ring which is associated with the flexible tube;
a threaded coupling on said sleeve and said ring to mutually connect them and force them axially against each other; and
an intermediate annular element cooperating with the ring and being provided with at least one annular or helical protrusion protruding radially toward the axis of said ring to engage respective grooves which separate corresponding parallel or helical undulations of the flexible tube, said at least one annular or helical protrusion having a profile which is shaped complementary to the profile of the grooves which separate the undulations of the flexible tube, and the ring being provided with a collar suitable to engage said intermediate annular element so as to push the undulated flexible tube into forced contact engagement against said sleeve when the threaded coupling is tightened by turning the ring with respect to said sleeve;
said annular element comprising two juxtaposable annular element parts which are able to mutually divaricate in order to fit said annular element on the flexible tube.

The assembly is characterized in that:
said intermediate annular element is at least partially made of elastomer material, and is forced and compressed between said ring and an abutment surface of the sleeve; and
said two juxtaposable annular element parts are connected by a thin film defined in the elastomer portion of said annular element parts and acting as a hinge element for connecting said parts.

In the preferred embodiment, the annular element is produced in the two parts which are separated, with respect to the annular element, along the diametrical plane.

Further advantages will become apparent from the following detailed description and with reference to the accompanying drawings, provided by way of non-limitative example, wherein:
figure 1 is a partially sectional elevation view of the coupling device according to an embodiment of the invention;
figure 2 to 4 are a partial sectional view, similar to figure 1, illustrating respective variations of the intermediate annular element;
figure 5 is a perspective view of a preferred embodiment of the intermediate annular element of figures 1 to 4.

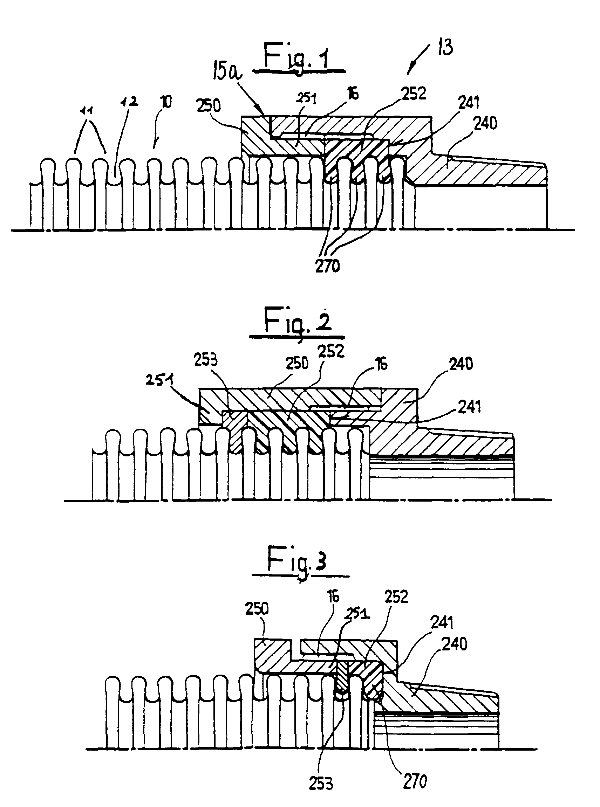

Initially with reference to figures 1 to 4, the reference numeral 10 designates the flexible metal tube, of the type which comprises undulations 11 which are separated by parallel or helical grooves 12. The reference numeral 13 generally designates the device according to the invention, which is suitable to provide the tight and weld-free quick-coupling of the tube 10 to a rigid tube or union, not shown in the figure.

The device 13 is substantially constituted by a sleeve 240 which is meant to be connected to the rigid tube or sleeve and by a ring 250 which is meant to be associated with the flexible tube 10; the ring is metallic or made of a high-strength polymeric material.

Correspondingly threaded portions 16 are provided on the sleeve 240 and on the ring 250 and allow to mutually connect said sleeve and said ring and force them axially against each other; the ring is provided with a hexagonal outer surface 15a for the engagement of a wrench for tightening.
The ring is cylindrical and acts on an intermediate annular element 252, which comprises two parts which can be arranged face to face, and is provided with protrusions 270 which are meant to couple with the grooves 12 of the tube 10.
The intermediate annular element 252 with the protrusions 270 is made, fully or partially, of elastomer material, for example hard rubber, and is forced and compressed between the ring 250 and an abutment surface 241 of the sleeve 240 or between at least one metallic portion 253 of the intermediate annular element and said abutment of the sleeve (figure 2); the metallic portion or portions and the elastomer one are preferably coupled by vulcanization. In both cases, the axial extension of the intermediate annular element 252 is chosen so that at least the terminal undulation of the flexible tube, which faces the sleeve, is not embraced by the ring, i.e. is external thereto.

In the embodiment of figure 3, the intermediate annular element 252 is provided with a single annular or helical protrusion 270 interposed between the last undulation of the tube 10 and the abutment surface 241 of the sleeve 240; the tube 10 is sectioned at a groove 12.

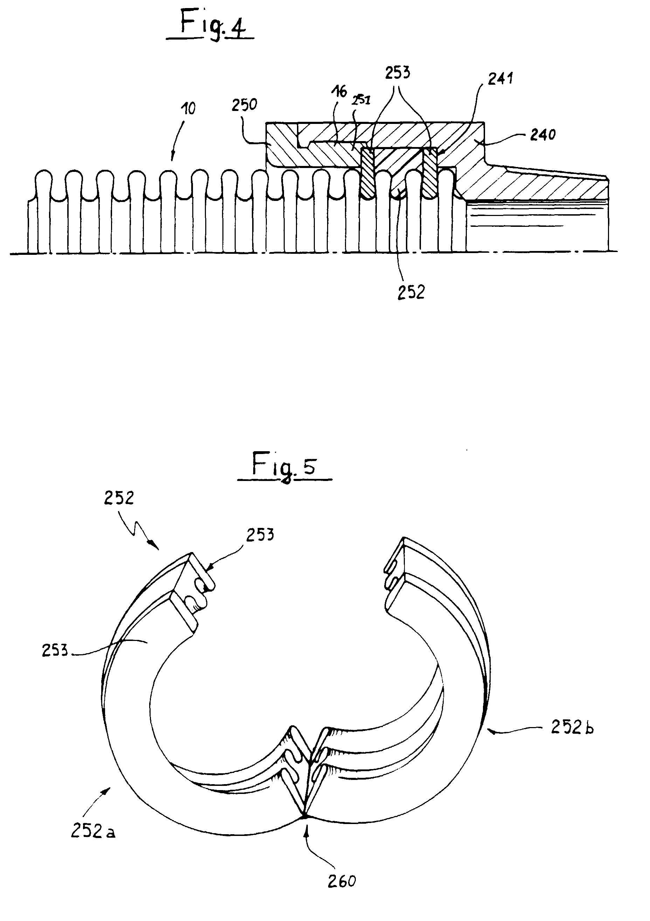

In figure 4, the elastomer portion of the intermediate annular element 252 is comprised between two metallic portions 253, and in this case, too, as in the case of figure 1, the overall axial extension of the annular element is such that the terminal undulation of the tube, which faces the sleeve 240, is not embraced by the annular element 252; the metallic portion 253 directed toward the sleeve is in contact with the abutment surface 241 of the sleeve 240.

The intermediate annular elements 252 of figures 1 to 4 are advantageously produced as shown in figure 5, wherein it can be seen that the two parts 252a-252b of the annular element are connected by a thin film 260 defined in the elastomer portion. The film 260 acts as a hinge which allows to mutually divaricate the two parts 252a-252b of the annular element so as to allow to fit said annular element on the tube. At the same time, said film 60 allows to keep the two parts of the annular element mutually connected, facilitating storage and use of said annular element when it is not used.

In practice it has thus been observed that the above described device has achieved the intended aim and objects of the present invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. An assembly comprising an unbraided flexible metal tube (10), a rigid tube, union or the like, and a coupling device (13) for connecting said flexible tube to said rigid tube, union or the like, the coupling device comprising:
a sleeve (240) which is associated with the rigid tube or union;
at least one cylindrical ring (250) which is associated with the flexible tube;
a threaded coupling (16) on said sleeve and said ring to mutually connect them and force them axially against each other; and
an intermediate annular element (252) cooperating with the ring and being provided with at least one annular or helical protrusion (270) protruding radially toward the axis of said ring to engage respective grooves (12) which separate corresponding parallel or helical undulations (11) of the flexible tube, said at least one annular or helical protrusion having a profile which is shaped complementary to the profile of the grooves which separate the undulations of the flexible tube, and the ring being provided with a collar (251) suitable to engage said intermediate annular element so as to push the undulated flexible tube into forced contact engagement against said sleeve when the threaded coupling is tightened by turning the ring with respect to said sleeve;
said annular element comprising two juxtaposable annular element parts (252a-b) which are able to mutually divaricate in order to fit said annular element on the flexible tube;
**the coupling device being characterized in that:**
said intermediate annular element (252) is at least partially made of elastomer material, and is forced and compressed between said ring (250) and an abutment surface (241) of the sleeve (240); and
said two juxtaposable annular element parts (252a-b) are connected by a thin film (260) defined in the elastomer portion of said annular element parts and acting as a hinge element for connecting said parts.

2. The assembly of claim 1, characterized in that the intermediate annular element is formed by metal portions (253) and elastomer portions.

3. The assembly of any one or more of the preceding claims 1-2, characterized in that the axial extension of the intermediate annular element is chosen so that at least the terminal undulation of the flexible tube which faces the sleeve is external to said intermediate annular element.

4. The assembly of any one or more of the preceding claims 1-2, characterized in that the intermediate annular element is provided with a single annular or helical protrusion and in that said protrusion is interposed between the last undulation of the flexible tube and the abutment surface on the sleeve.

## Patentansprüche

1. Einheit, mit einem nicht geflochtenen, biegsamen Metallschlauch (10), und einem starren Rohr, einem Rohrverbinder o.ä., und einer Kupplung (13) zum Verbinden des biegsamen Rohres mit dem starren Rohr, dem Rohrverbinder o.ä., wobei die Kupplung folgendes aufweist:
eine Buchse (240), die mit starren Rohr oder dem Rohrverbinder verbunden ist;
zumindest einen zylindrischen Ring (250), der mit dem biegsamen Rohr verbunden ist;
mit einem Gewinde (16) an der Buchse und dem Ringelement, zum Verbinden der beiden und zum axialen Aneinanderpressen; und
einem Zwischen-Ringelement (252), das mit dem Ring zusammenwirkt und zumindest einen ringförmigen oder schraubenförmigen Vorsprung (270) aufweist, der radial zur Achse des Rings hervorsteht, um in entsprechende Nuten (12) einzugreifen, die die entsprechenden parallelen oder schraubenförmigen Rippen (11) des biegsamen Rohres voneinander trennen, wobei der zumindest eine ringförmige oder schraubenförmige Vorsprung ein Profil aufweist, das komplementär zu dem Profil der Nuten ausgebildet ist, die die Rippen des biegsamen Rohres voneinander teilen, und wobei der Ring einen Flansch (251) aufweist, der geeignet ist, an dem Zwischen-Ringelement anzuliegen, so daß das gewellte biegsame Rohr unter Druck gegen die Buchse bewegt wird, wenn das Gewinde angezogen wird, indem der Ring relativ zu der Buchse verdreht wird;
wobei das Ringelement zwei benachbarte Ringelementteile (252a-b) aufweist, die in bezug zueinander aufgeklappt werden können, um das Ringelement auf das biegsame Rohr aufzusetzen;
**wobei die Kupplung dadurch gekennzeichnet ist, daß:**
das Zwischen-Ringelement (252) zumindest teilweise aus einem Elastomermaterial besteht und zwischen Ring (250) und einer Anlagefläche (241) der Buchse (240) zusammengedrückt wird; und
die beiden benachbarten Ringelemente (252a-b) mittels eines dünnen Films (260) miteinander verbunden sind, der im Elastomer-bereich der Ringelemente ausgebildet ist und als die beiden Teile verbindendes Scharnier wirkt.

2. Einheit nach Anspruch 1, dadurch gekennzeichnet, daß das Zwischen-Ringelement aus Metallbereichen (253) und Elastomerbereichen besteht.

3. Einheit nach einem der Ansprüche 1 bis 2, dadurch gekennzeichnet, daß die axiale Ausdehnung des Zwischen-Ringelementes so gewählt ist, daß die Abschlußrippe des flexiblen Rohrs, die der Buchse zugewandt ist, außerhalb des Zwischen-Ringelementes liegt.

4. Einheit nach einem der vorhergehenden Ansprüche 1 bis 2, dadurch gekennzeichnet, daß das Zwischen-Ringelement einen einzigen ringförmigen oder schraubenförmigen Vorsprung aufweist, und daß der Vorsprung zwischen der letzten Rippe und der Anlagefläche der Buchse angeordnet ist.

## Revendications

1. Un ensemble comprenant un tube métallique flexible non tressé (10), un tube, raccord ou similaire, rigide, et un dispositif de couplage (13) pour relier ledit tube flexible audit tube, raccord ou similaire, rigide, le dispositif de couplage comprenant:
- un manchon (240) qui est associé au tube ou raccord rigide;
- au moins une bague cylindrique (250) qui est associée au tube flexible;
- un accouplement vissé (16) sur ledit manchon et ladite bague pour les relier l'un à l'autre et les repousser axialement l'un contre l'autre; et
- un élément annulaire intermédiaire (252) coopérant avec la bague, et muni d'au moins une partie en saillie annulaire ou hélicoïdale (270), faisant saillie radialement en direction de l'axe de ladite bague pour venir en contact avec des rainures correspondantes (12), qui séparent des ondulations correspondantes, parallèles ou hélicoïdales (11), du tube flexible, ladite au moins une partie en saillie annulaire ou hélicoïdale présentant un profil dont la forme est complémentaire du profil des rainures qui séparent les ondulations du tube flexible, et la bague étant munie d'un collier (251) susceptible de venir en contact avec, ou en appui, sur ledit élément annulaire intermédiaire, de façon à repousser le tube flexible ondulé en contact d'engagement forcé contre ledit manchon, lorsque l'accouplement vissé est serré en faisant tourner la bague par rapport audit manchon;
ledit élément annulaire comprenant deux parties juxtaposables d'éléments annulaires (252a-b) qui sont susceptibles de diverger l'une par rapport à l'autre, afin de s'ajuster exactement sur ledit élément annulaire, sur le tube flexible;
le dispositif de couplage étant caractérisé en ce que:
ledit élément annulaire intermédiaire (252) est au moins partiellement réalisé en matériau élastomère, et est repoussé et comprimé entre ladite bague (250) et une surface de butée (241) du manchon (240); et
lesdites deux parties juxtaposables d'élément annulaire (252a-b) sont reliées par un film mince (260) défini dans la partie en élastomère desdites parties d'éléments annulaires, ce film remplissant la fonction d'un élément de charnière pour relier lesdites parties.

2. L'ensemble selon la revendication 1, caractérisé en ce que l'élément annulaire intermédiaire est constitué de parties en métal (253) et de parties en élastomère.

3. L'ensemble selon l'une quelconque ou plusieurs des revendications précédentes 1 et 2, caractérisé en ce que le prolongement axial de l'élément annulaire intermédiaire est choisi de telle façon qu'au moins l'ondulation terminale du tube flexible qui fait face au manchon soit à l'extérieur par rapport audit élément annulaire intermédiaire.

4. L'ensemble selon 'une quelconque ou plusieurs des revendications précédentes 1 et 2, caractérisé en ce que l'élément annulaire intermédiaire est muni d'une seule partie en saillie, annulaire ou hélicoïdale, et en ce que ladite partie en saillie est interposée entre la dernière ondulation du tube flexible et la surface de butée sur la manchon.
